(19) Europäisches Patentamt
European Patent Office
Office européen des brevets

(11) **EP 1 972 965 A2**

(12) **EUROPEAN PATENT APPLICATION**

(43) Date of publication:
**24.09.2008 Bulletin 2008/39**

(51) Int Cl.:
***G01V 7/12*** (2006.01)

(21) Application number: **08005331.7**

(22) Date of filing: **20.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **22.03.2007 US 907151 P**

(71) Applicant: **Scintrex Limited**
**Ontario L4K 1B5 (CA)**

(72) Inventors:
• **Rodriguez, Daniel Jesus**
**Broomfield**
**Colorado 80020 (US)**

• **Niebauer, Tim**
**Lafayette**
**Colorado 80026 (US)**
• **Siegel, Harold**
**Concord**
**Ontario L4K 1B5 (CA)**

(74) Representative: **Naismith, Robert Stewart et al**
**Marks & Clerk**
**19 Royal Exchange Square**
**Glasgow**
**G1 3AE (GB)**

(54) **Method and apparatus for measurements of gravity in small diameter boreholes**

(57) An apparatus (10) for measuring gravity in a small diameter borehole comprises a pressure tube (12) and at least one pendulum gravity sensor (14) accommodated by the pressure tube. The gravity sensor comprises a pendulum (22) and circuitry (44, 46) to monitor generally continuously the swing period and amplitude of the pendulum.

Fig. 2

**Description**

**Field of the Invention**

The present invention relates to gravity measurements and in particular, to a method and apparatus for measurements of gravity in small diameter boreholes.

**Background of the Invention**

Measurements of the acceleration "g" due to the Earth's gravitational attraction are of considerable interest for a variety of objectives, such as the basic mapping of subsurface geology, the exploration for and development of mineral and hydrocarbon resources, volcanology, geotechnical investigations and the environment. For mapping purposes, measurements of the value g are commonly made at stations on surface on a systematic grid basis, or at regular intervals down a borehole, but they may also be made at the same stations at different times, in order to monitor changes in the gravitational field that may have occurred. Such time-lapse changes are of significance in the prediction of volcanic eruptions and the probability of earthquake occurrences, and for monitoring changes in the condition of hydrocarbon reservoirs, etc. With the increased value of crude oil and natural gas, there is great incentive to optimize the efficiency in the extraction of hydrocarbon resources from their source deposits. As such, monitoring changes in the condition of hydrocarbon reservoirs and the like is of particular interest.

The value of g is normally expressed in one of two units, namely $m/s^2$ or Gal (after Galileo Galilei, 1564-1642). This second unit for the value of g is commonly employed by geophysicists. One Gal is defined as $10^{-2}$ $m/s^2$. The value of g varies over a relatively small range on the Earth, namely only about 0.5% from the equator (about 9.780 $m/s^2$) to the poles (about 9.830 $m/s^2$). The degree of precision (or sensitivity) required for an individual measurement of the value g depends on the application for the measurement. For example, for regional geological mapping on the scale of 1: 1,000,000, a sensitivity of 1 mGal (milliGal, or $10^{-5}$ $m/s^2$) is adequate. However, when monitoring changes in hydrocarbon reservoirs, or in precise determinations of bulk densities in boreholes, it is necessary to achieve a measurement sensitivity in the order of $1\mu$Gal, namely one part per billion of the value of g.

The paper entitled "On Density Derived from Borehole Gravity", authored by Xiong Li and Michel Chouteau (The Log Analyst, Vol. 40, No.1, pages 33-40, 1999), may be used to provide the theoretical basis for the relationship between the vertical gradient of gravity in a borehole and the bulk density of the formations being traversed by the borehole. The normal vertical gradient (increase) of gravity (dg) with increasing depth (dz) in a borehole in mGal/m (or $\mu$Gal/mm), is given by Equation (1) below:

$$dg / dz = (0.3086 - .0838d) \qquad (1)$$

where:

d is the bulk density, in $g/cm^3$, of the formation being traversed; and
z is the depth in metres.

Equation (1) can be inverted to derive bulk density d according to Equation (2) as follows:

$$d = 11.93 \, (0.3086 - dg/dz) \qquad (2)$$

Thus, by measuring the value of gravity between two stations at different depths in a borehole, one may determine the mean bulk density of the formations lying between the two depths.

There are basically two types of gravimeters in use today for stationary gravity measurements, namely "absolute" and "relative" gravimeters. Absolute gravimeters in use today measure the total field or full value of g, by dropping a corner cube in a vacuum, and measuring the acceleration of the corner cube, using a laser beam which is reflected by the corner cube, and an interferometer. A good example of a modem absolute gravimeter is the FG5 instrument produced by Micro-g-LaCoste of Colorado, U.S.A. as is disclosed in U.S. Patent No. 5,351,122 to Niebauer et al.

Relative gravimeters do not provide measurements of the full value of g, but only measure differences in g, from place to place, or from time to time. Relative gravimeters in use today commonly operate on the deflection, by changes in gravity, of the position of a proof mass which is supported by an elastic spring member. A good example of a modem relative gravimeter is the CG5 instrument produced by Scintrex Limited of Ontario, Canada. Whereas relative gravimeters enjoy certain advantages, such as size and power requirements relative to a falling body absolute gravimeter, they are subject to drift, which is a concern for long term monitoring of hydrocarbon reservoir changes.

The earliest device that has been employed to measure the total or absolute value of g is the pendulum. Serious attempts to measure the period of an oscillating pendulum in order to determine the value of g were initiated in the early part of the 19th century, and continued, with progressive improvements in sensitivity, until the latter part of the 20th century. Interest waned in pendulum measurements of g with the advent around 1930, of the first relative gravimeters. Interest diminished further around 1980 with the introduction of the direct measurement of g (to the order of 10$\mu$Gal), using optical interferometry to observe the time of fall of a falling body. A general review of these and other gravity measuring devices may be found in the publication entitled "Gravimetry", authored by W. Torge (Walter de Gruyter publishers, 1989). Despite the paucity of interest in recent times, the pendulum is, in principle, a very simple approach to the measurement of the total value of g.

The importance of monitoring the status of hydrocarbon reservoirs during the resource extraction stage is well acknowledged in the industry. It is also acknowledged that essential information on the status of hydrocarbon reservoirs can be derived by monitoring changes in the bulk density of the hydrocarbon reservoir formations. As a result, measuring the value of gravity in boreholes is of great interest. Such boreholes are however, typically small in diameter, reaching diameters as small as 58mm. This of course makes taking gravity measurements downhole challenging.

U.S. Patent No. 6,671,057 to Orban discloses a differential gravity sensor and system for monitoring reservoirs. The gravity sensor includes a first mass adapted to free fall when selectively released from an initial position. The first mass has optical elements adapted to change a length of an optical path in response to movement of the first mass. The sensor output is coupled to a beam splitter. One output of the beam splitter is coupled substantially optically directly to an interferometer. Another output of the beam splitter is coupled to the interferometer through an optical delay line. The frequency of the interference pattern is directly related to gravity at the first mass. A second such mass having similar optics, optically coupled in series to the first mass and adapted to change the path length in opposed sign, when selectively dropped to cause time coincident movement of the two masses, generates an interference pattern having frequency related to gravity difference. As will be appreciated, the Orban gravity sensor is an absolute one, based on measurements of a free-falling body. Unfortunately, this gravity sensor is simply far too large and complex for use in the small diameter borehole environment in the hydrocarbon industry.

U.S. Patent No. 5,892,151 to Niebauer et al. discloses a differential interferometric ballistic gravity measurement apparatus and method for measuring differential gravity between separate points. The apparatus employs at least two separate gravity sensors having respective free-fall masses capable of independent operation, an arrangement mounting the gravity sensors independent of one another in respective self-leveling states and at separate locations, a fiber optic-guided laser light interferometer coupled to the gravity sensors and adapted to produce a light signal indicative of a single measurement of differential gravity between the separate locations where the gravity sensors are situated, and a processing control system coupled to the gravity sensors and the interferometer for activating independent operation of the gravity sensors and the interferometer and for detecting the light signal and producing an electrical signal representing the measurement of differential gravity between the separate locations. Similar to the Orban gravity sensor, this ballistic gravity measurement apparatus is costly and complex, making it unsuitable for use in a small diameter borehole environment in the hydrocarbon industry.

As will be appreciated there is a need for a total field gravimeter that is compatible in sensitivity, size, complexity and cost, with the reservoir monitoring needs of the hydrocarbon industry. The only type of absolute gravity sensor that appears to be suited to this requirement of the hydrocarbon industry is one based on a pendulum. Unfortunately, the high sensitivity pendulums described in the aforementioned Torge publication are much too large (25cm or longer) to be used in a small diameter borehole for determination of the bulk density of formations traversed by the borehole. However, in the publication entitled "A Pendulum Gravimeter for Precision Detection of Scalar Gravitational Radiation", authored by David A. Curott (PhD. Thesis, Princeton University, May, 1965), a smaller pendulum sensor having a total length in the order of 2cm, and a measurement sensitivity in the order of several tens of $\mu$Gals is disclosed. Although of interest, the sensitivity of this pendulum sensor is still at least one order of magnitude too large to meet the requirements of the hydrocarbon industry.

It is therefore an object of the present invention to provide a novel method and apparatus for measurements of gravity in small diameter boreholes.

## Summary of the Invention

Accordingly, in one aspect there is provided an apparatus for measuring gravity in a small diameter borehole comprising:

a pressure tube; and

at least one pendulum gravity sensor accommodated by said pressure tube, said at least one gravity sensor comprising a pendulum and circuitry to monitor generally continuously the swing period and amplitude of said pendulum.

In one embodiment, each pendulum gravity sensor further comprises a sealed enclosure accommodating the pendulum and a leveling mechanism that maintains the enclosure generally in a level condition. The pendulum comprises a mass that moves back and forth between a pair of plates. The plates form part of the circuitry. The circuitry applies an electrostatic pulse between the plates to cause the mass to swing.

The circuitry in one embodiment comprises an AC capacitor bridge. One arm of the capacitor bridge is defined by one of the plates and the mass and another arm of the capacitor bridge is defined by another of the plates and the mass. A measurement circuit communicates with the AC capacitor bridge. The measurement circuit examines output of the AC capacitor bridge to determine times of closest approach of the mass to the plates thereby to determine the swing period and determines the amplitude of the swing at each closest approach. The measurement circuit corrects the swing period using the swing amplitude. If desired, the measurement circuit can average the swing period and amplitude over selected time intervals and transmit the swing period and amplitude to a surface location.

To maintain accuracy, the enclosure is evacuated and the pendulum is formed of material having a low coefficient of thermal expansion. The pendulum has a swing period of about 0.2 seconds and a maximum swing amplitude of about $10^{-2}$ radians.

In another embodiment, the apparatus comprises a plurality of spaced, pendulum gravity sensors accommodated by the pressure tube.

According to another aspect there is provided a method of measuring gravity within a small diameter borehole comprising:

deploying at least one pendulum gravity sensor within a pressure tube downhole;
leveling each said sensor relative to the vertical:
causing a pendulum of each said sensor to swing;
measuring the swing period and amplitude of swing of each pendulum generally continuously; and
determining the value of gravity from said measurements.

According to yet another aspect there is provided an apparatus for measuring gravity in a small diameter borehole comprising:

an outer casing; and
a plurality of spaced, miniature pendulum gravity sensors accommodated by said casing.

### Brief Description of the Drawings

Embodiments will now be described more fully with reference to the accompanying drawings in which:

Figure 1 shows a well logging instrument employing a pendulum gravity sensor;
Figure 2 is a side elevational view of the pendulum gravity sensor shown in Figure 1;
Figure 3 is an enlarged side elevational view of a portion of the pendulum gravity sensor; and
Figure 4 shows another well logging instrument employing a plurality of pendulum gravity sensors.

### Detailed Description of the Embodiments

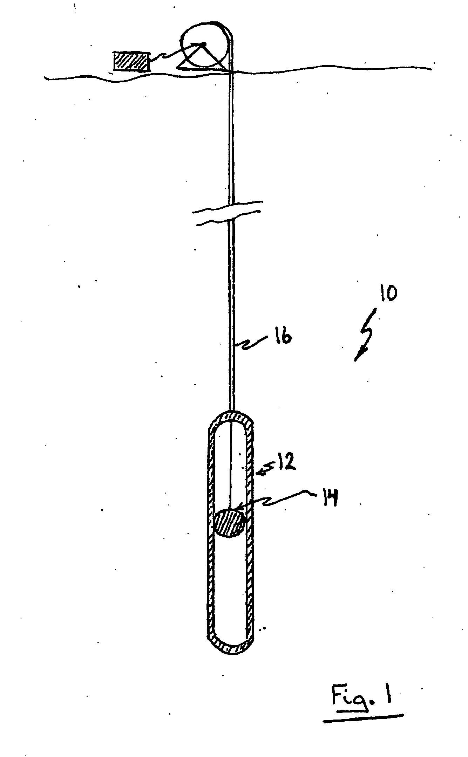

A method and apparatus for measuring gravity in a small diameter borehole is described herein. The apparatus comprises a pressure tube and at least one pendulum gravity sensor accommodated by the pressure tube. During measuring, the apparatus is deployed downhole while maintaining the at least one pendulum gravity sensor in a substantially level condition. The pendulum of each sensor is caused to swing and the swing period and amplitude of the pendulum are measured generally continuously. The value of gravity is accurately determined using the swing period and swing amplitude measurements. Specific embodiments of the apparatus for measuring gravity in a small diameter borehole will be described with reference to Figures 1 to 4. Before doing so however, a discussion of gravity measurements using a pendulum will firstly be provided for ease of understanding.

As shown in the publication entitled "The Earth and its Gravity Field", authored by Heiskanen and Meinesz (McGraw-Hill, 1958, p87-93), for a simple "mathematical" pendulum, the relationship expressed by Equation (3) below exists between the period of a pendulum T (seconds), its length l (m), and the value of g (m/s$^2$):

$$T = 2\pi (l/g)^{1/2} \qquad\qquad (3)$$

From Equation (3), the value of g can be determined according to Equation (4) below:

$$g = 4\pi^2 l/T^2 \qquad\qquad (4)$$

For a real physical pendulum, l is replaced by the term K/Ma, where K is the moment of inertia of the pendulum about the swinging axis, M is the mass of the pendulum, and a is the distance between the centre of mass of the pendulum and its point of suspension. As will be appreciated, Equation (3) is just a first approximation to the solution of the equation of motion of the pendulum, and applies only for infinitesimally small amplitudes of oscillation. A more rigid relationship between the period of the pendulum and the value of g involves an elliptic integral of the first kind, as discussed in the Heiskanen and Meinesz reference referred to above.

A correction to Equation (3) may be made, however, for finite but small angles of oscillation, based on the expansion of the elliptic integral in a power series, provided that these angles of oscillation may be measured with high precision. This correction to include the next term in the full solution for finite but small angles of oscillation $\varnothing_0$ (in radians), is given by Equation (5) below:

$$T = T_0 (1 + \varnothing_0^2/16) \qquad\qquad (5)$$

where:

T is the observed period; and
$T_0$ is the period for infinitesimally small oscillation amplitudes.

Taking the above into account, Equation (4) becomes:

$$g = 4\pi^2 l(1 + \varnothing_0^2/16)^2/ T^2 \qquad\qquad (6)$$

For small angles of oscillation $\varnothing_0$, Equation (6) above may be written as:

$$g = 4\pi^2 l(1 + \varnothing_0^2/8)/T^2 \qquad\qquad (7)$$

To examine the dependence of the determination of the value g on the stability of the maximum oscillation (or swing) amplitude $\varnothing_0$, it can be determined from Equation (5), that for a change $d\varnothing_0$ in oscillation amplitude $\varnothing_0$ the resultant change dg in the value g is given by Equation (8) below:

$$dg/g = + \varnothing_0 d\varnothing_0/4 \qquad\qquad (8)$$

If sensitivity in the order of $1\mu$Gal (1 ppb) in the measurement of the value g by a pendulum is desired, three options are available. As a first option, the term $\phi_0^2/16$ may be reduced to $<10^{-9}$ requiring that the maximum oscillation amplitude $\phi_0 < 26$ arc seconds, a very small amplitude of oscillation indeed. As a second option, for finite, but still small oscillation amplitudes $\phi_0$, the term $\phi_0 d\phi_0$ may be reduced to $< 10^{-8}$. For example, if the maximum oscillation amplitude $\phi_0$ of $10^{-2}$ radians (0.5 degrees), then $d\phi_0$ must be maintained $< 10^{-6}$ radians (0.2 arc seconds). This requires an extreme order of stabilization of the amplitude of oscillation of the pendulum. As a third option, the oscillation amplitude $\phi_0$ of the pendulum can be generally continually measured with sufficient precision that appropriate corrections for the value g may be applied to each observed period, T, in accordance with Equations (6) or (7). The apparatus for the measurement of absolute gravity discussed herein employs the third option, as will now be described.

Turning now to Figure 1, a well logging instrument or "sonde" for insertion into a small diameter borehole, in order to make downhole measurements of absolute gravity, is shown and is generally identified by reference number 10. As can be seen, the sonde 10 comprises a pressure casing or tube 12 enclosing a very small or "miniature" absolute gravity pendulum sensor 14. The total length of the absolute gravity pendulum sensor 14 in this embodiment is in the order of 2cm. Measurement control and communication with the surface is accomplished through a multiconductor cable 16 coupled to the pressure casing 12. The sonde 10 may be employed to make measurements at regularly spaced intervals (stations) down a small diameter borehole to produce a gravity "log" of the formations traversed by the borehole. Such gravity measurements may be used to derive the bulk density of the formations being traversed by the borehole as well as to map density changes in formations away from the borehole, as described above with reference to the Li et al. publication.

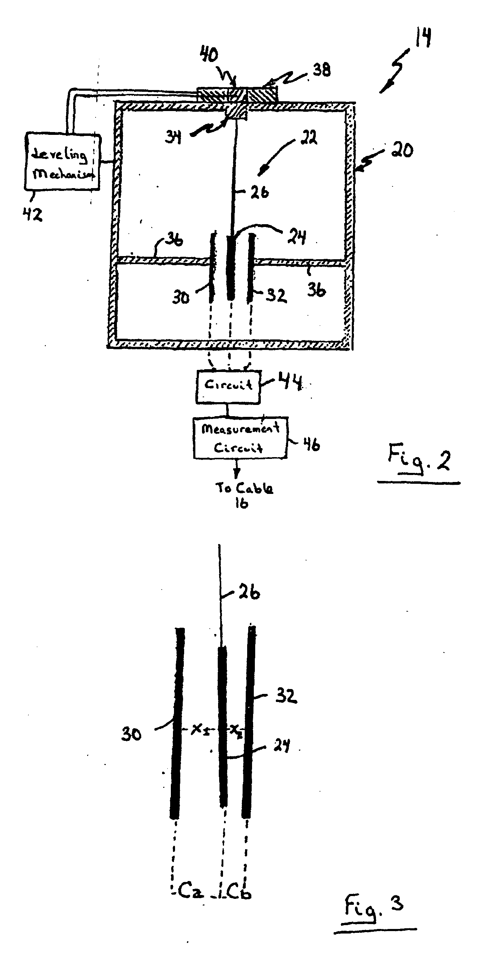

Turning now to Figure 2, the absolute gravity pendulum sensor 14 is better illustrated. As can be seen, the absolute gravity pendulum sensor 14 comprises a sealed enclosure 20 accommodating a pendulum 22. Pendulum 22 includes a planar mass 24 at one end of a fibre 26. The planar mass 24 is positioned between two closely placed, fixed capacitor plates 30 and 32 and swings in the plane of the figure, between the two capacitor plates. The other end of the fibre 26 is fixed to an attachment point 34 at the top of the enclosure 20 in a manner so as to suppress off-axis and rotational swing modes of the pendulum 22. Each capacitor plate 30, 32 is fixed to an opposite side wall of the enclosure 20 by a generally horizontal frame element 36. Two sensitive, orthogonal level sensors 38 and 40 are disposed on the top of the enclosure 20 and communicate with a leveling mechanism 42. The leveling mechanism 42 comprises a pair of servo-motors (not shown), each responsive to a respective one of the level sensors 38 and 40. The servo-motors rotate the enclosure 20 in two orthogonal planes so that the enclosure remains virtually perfectly horizontal, thus ensuring that the mass 24 swings symmetrically between the two capacitor plates 30 and 32.

A circuit 44 is coupled to the capacitor plates 30 and 32 to establish an AC capacitor bridge circuit. One arm of the capacitor bridge circuit is defined by the capacitor plate 30 and the mass 24 and the other arm of the capacitor bridge circuit is defined by the capacitor plate 32 and the mass 24. Circuit 44 communicates with a measurement circuit 46.

The atmosphere within the enclosure 20 is evacuated to about $3 \times 10^{-9}$ torr to reduce damping of the pendulum motion to a very low order. To reduce errors due to thermal expansion of the pendulum 22, the material of the mass 24 and fibre 26 is chosen for its very low intrinsic coefficient of thermal expansion (e.g. fused quartz or invar), and the enclosure 20 is placed within a thermostatically controlled oven, virtually to eliminate any residual thermal effects.

The AC capacitor bridge circuit is used to apply a DC electrostatic pulse between the two capacitor plates 30 and 32 thereby to cause the pendulum 22 to swing, or to increase its amplitude, from time to time. The measurement circuit 46, which communicates with the AC capacitor bridge circuit, measures the swing amplitude and period of the pendulum 22 generally continuously, as will now be described.

In operation, the sonde 10 is lowered down a borehole so that measurements can be made downhole at spaced intervals. When a measurement is to be made, the AC capacitor bridge circuit is conditioned to apply a DC electrostatic pulse between the capacitor plates 30 and 32 causing the pendulum 22 to swing, resulting in the mass 24 moving between the capacitor plates 30 and 32. In this embodiment, the pendulum 22 has a mean swing period of about 0.2 seconds and a maximum swing amplitude of about $10^{-2}$ radians.

Figure 3 shows motion of the swinging mass 24 relative to the capacitor plates 30 and 32. In this figure, $x_1$ and $x_2$ are the mean separations between the moving mass 24 and capacitor plates 30 and 32 respectively. The capacitance of the first arm of the AC capacitor bridge circuit is designated as Ca, and the capacitance of the second arm of the AC capacitor bridge circuit is designated as Cb. Since these capacitances are, to a first approximation, inversely proportional to the mean separation of the respective capacitor plates, the output of the AC capacitor bridge circuit can be expressed by Equation (9) below:

$$Ca/Cb = x_2/x_1 \qquad\qquad (9)$$

The output of the AC capacitor bridge circuit is applied to the measurement circuit 46. Measurement circuit 46 uses the output of the AC capacitor bridge circuit for two purposes, firstly to measure the swing period of the pendulum 22, in order to derive the value of absolute gravity, and secondly, to measure the swing amplitude of the pendulum 22. The swing amplitude information is required in order to apply a correction to the swing period to take into account the finite amplitude of the pendulum swing, in accordance with Equations (6) or (7). If the maximum swing amplitude of the mass 24 is very close to the separation of the two capacitor plates 30 and 32, the ratio of Ca/Cb becomes very large at the extremes of the pendulum swing. As a result, this pendulum motion measuring technique is extremely sensitive to small changes in the maximum displacement of the pendulum 22. In fact, the AC capacitor bridge circuit can measure pendulum swing changes as small as an Angstrom ($10^{-10}$ m). For a pendulum 22 having a length of about 2cm and a swing oscillation amplitude $\phi_0$ of $10^{-2}$ radians, a displacement change of 1 Angstrom in the extreme position of the mass 24 is equivalent to $\phi_0 d\,\phi_0 = 10^{-10}$, which is well within the degree of precision required to measure total gravity to the order of a few $\mu$Gals.

In order to determine the swing amplitude of the pendulum 22, the measurement circuit 46 determines the maximum and minimum peak values of the AC capacitor bridge circuit output, which represent the extremes of the swing of the pendulum 22. Due to the non-linearity of the ratio expressed by Equation (9), the ratio is very sensitive to the points of closest approach of the mass 24 to each fixed capacitor plate 30 and 32. The measurement circuit 46 determines the times of closest approach of the mass 24 to the capacitor plates 30 and 32 by detecting the zero crossings of the time derivative of Equation (9), thereby to determine the period of the pendulum 22. The determined pendulum swing amplitude and period are averaged by the measurement circuit 46 over appropriate time intervals to improve the signal-to-noise (SNR) ratio. The average pendulum swing amplitude and period are then transmitted along cable 16 by the measurement circuit 46 for recording and/or further processing as required.

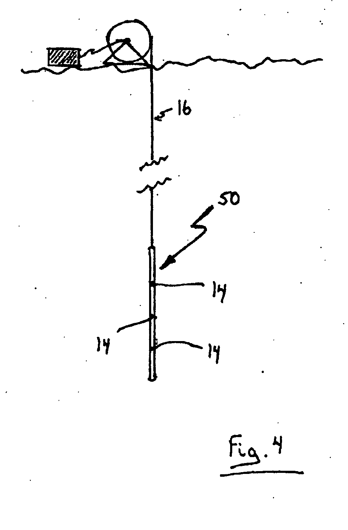

Turning now to Figure 4, a sonde 50 comprising a pressure tube 12 accommodating a plurality of spaced apart, pendulum gravity sensors 14 is shown placed in position in a borehole. In this embodiment, measurements of total gravity are made simultaneously with all gravity sensors 14 at each station providing for greater efficiency of coverage for the desired number of stations in the borehole. A further advantage of using multiple gravity sensors 14 to make a number of simultaneous measurements is that common-mode external noises, due to microseisms or small movements of the sonde 50, which will generally affect all sensors identically, may be suppressed.

In the above embodiments, although an AC capacitor bridge circuit is used to monitor generally continually the swing amplitude and period of the pendulum 22, those of skill in the art will appreciate that other methods may be employed for making highly sensitive measurements of the pendulum swing period and amplitude, and for imparting energy as required to maintain the motion of the pendulum.

Also, in the above embodiments, the gravity pendulum sensor is described as having a length in the order of about 2cm. A gravity pendulum sensor with a length less than 3cm will however permit measurements of the desired sensitivity to be made.

Although embodiments have been described above with reference to the figures, those of skill in the art will appreciate that variations and modifications may be made without departing from the spirit and scope thereof, as defined by the appended claims.

**Claims**

1. An apparatus for measuring gravity in a small diameter borehole comprising:

   a pressure tube; and
   at least one pendulum gravity sensor accommodated by said pressure tube, said at least one gravity sensor comprising a pendulum and circuitry to monitor generally continuously the swing period and amplitude of said pendulum.

2. An apparatus according to claim 1 wherein each said pendulum gravity sensor further comprises a sealed enclosure accommodating said pendulum.

3. An apparatus according to claim 2 wherein each said pendulum gravity sensor further comprises a leveling mechanism maintaining said enclosure generally in a level condition.

4. An apparatus according to any one of claims 1 to 3 wherein said pendulum comprises a mass that moves back and forth between a pair of spaced plates, said plates forming part of said circuitry.

5. An apparatus according to claim 4 wherein said circuitry applies an electrostatic pulse between said plates to cause said mass to swing.

6. An apparatus according to claim 5 wherein said circuitry comprises an AC capacitor bridge, one arm of the bridge being formed by the mass and one of said plates and another arm of the bridge being formed by the mass and the other of said plates.

7. An apparatus according to claim 6 wherein said circuitry comprises a measurement circuit communicating with said AC capacitor bridge, said measurement circuit examining output of said AC capacitor bridge to determine times of closest approach of said mass to said plates thereby to determine said swing period.

8. An apparatus according to claim 7 wherein said measurement circuit further determines the amplitude of swing of said mass at said times of closest approach of said mass to said plates.

9. An apparatus according to claim 8 wherein said measurement circuit corrects the determined swing period using said determined swing amplitude.

10. An apparatus according to any one of claims 7 to 9 wherein said measurement circuit averages the swing period and amplitude over intervals.

11. An apparatus according to any one of claims 7 to 10 wherein said measurement circuit transmits the swing period and amplitude to a surface location.

12. An apparatus according to claim 3 wherein said leveling mechanism communicates with at least one level sensor mounted on said enclosure.

13. An apparatus according to claim 12 wherein said leveling mechanism communicates with a pair of generally orthogonal level sensors mounted on said enclosure.

14. An apparatus according to any one of claims 4 to 11 wherein said mass is suspended on a fibre attached to said enclosure such that off-axis and rotational swing modes of said mass are suppressed.

15. An apparatus according to claim 2 wherein said enclosure is evacuated.

16. An apparatus according to any one of claims 4 to 11 wherein said pendulum is formed of material having a low coefficient of thermal expansion.

17. An apparatus according to any one of claims 4 to 11 wherein said pendulum has a swing period of about 0.2 seconds and a maximum swing amplitude of about $10^{-2}$ radians.

18. An apparatus according to claim 17 wherein each said pendulum gravity sensor has a length less than or equal to about 3cm.

19. An apparatus according to claim 18 wherein each said pendulum gravity sensor has a length equal to about 2cm.

20. An apparatus according to any one of claims 1 to 19 comprising a plurality of spaced gravity sensors accommodated by said pressure tube.

21. An apparatus according to any one of claims 1 to 8 wherein said swing amplitude is used to apply a correction to the swing period.

22. A method of measuring gravity within a small diameter borehole comprising:

   deploying at least one pendulum gravity sensor within a pressure tube downhole;
   leveling each said sensor relative to the vertical;
   causing a pendulum of each said sensor to swing;
   measuring the swing period and amplitude of swing of each pendulum generally continuously; and
   determining the value of gravity from said measurements.

23. The method of claim 22 wherein a plurality of pendulum gravity sensors are deployed and wherein the value of gravity is determined for each pendulum gravity sensor.

24. The method of claim 23 further comprising averaging the determined values of gravity.

25. The method of any one of claims 22 to 24 further comprising applying a correction to the measured swing period based on the measured swing amplitude.

26. An apparatus for measuring gravity in a small diameter borehole comprising:

    an outer casing; and
    a plurality of spaced, miniature pendulum gravity sensors accommodated by said casing.

27. An apparatus according to claim 26 wherein each said pendulum gravity sensor has a length less than or equal to about 3cm.

28. An apparatus according to claim 27 wherein each said pendulum gravity sensor has a length equal to about 2cm.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5351122 A, Niebauer
- US 6671057 B, Orban

- US 5892151 A, Niebauer

**Non-patent literature cited in the description**

- **XIONG LI ; MICHEL CHOUTEAU.** *The Log Analyst,* 1999, vol. 40 (1), 33-40
- A Pendulum Gravimeter for Precision Detection of Scalar Gravitational Radiation. **DAVID A. CUROTT.** PhD. Thesis. Princeton University, May 1965

- **HEISKANEN ; MEINESZ.** The Earth and its Gravity Field. McGraw-Hill, 1958, 87-93